# FASCICULE DE BREVET EUROPEEN

(11) **EP 3 503 499 B1**
(45) Date de publication et mention de la délivrance du brevet: **14.10.2020**
(21) Numéro de dépôt: 18213262.1
(22) Date de dépôt: 18.12.2018
(51) Int. Cl.: H04L 29/06, H04B 7/185, H04L 12/723

(54) **PROCÉDÉ D'OPTIMISATION DE L'EFFICACITÉ SPECTRALE DANS UN CONTEXTE D'INTERCONNEXION MPLS**
VERFAHREN ZUR OPTIMIERUNG DES EFFIZIENZ-SPEKTRUMS IM ZUSAMMENHANG MIT MPLS ZUSAMMENSCHALTUNG
METHOD FOR OPTIMIZING SPECTRAL EFFICIENCY IN AN MPLS INTERCONNECTION CONTEXT

(30) Priorité: 19.12.2017 FR 1701325
(43) Date de publication de la demande: 26.06.2019
(73) Titulaire: Thales, 92400 Courbevoie (FR)
(72) Inventeur: VAN WAMBEKE, Nicolas, 31100 Toulouse (FR); ROGNANT, Pierre, 31100 Toulouse (FR)
(74) Mandataire: Marks & Clerk France

(56) Documents cités:
- FR-A1- 3 006 534
- US-A1- 2006 007 925
- US-A1- 2011 122 893

## Description

L'invention se situe dans le domaine des systèmes de communication par satellite entre deux équipements de communication, notamment entre une passerelle et un terminal. Le terminal peut être embarqué dans un véhicule, notamment un aéronef, en particulier un drone. L'invention se place dans un contexte d'optimisation de l'utilisation de la bande passante sur le lien radio entre deux équipements de communication, dans un contexte d'interconnexion MPLS avec d'autres réseaux.

Une des contraintes principales dans les systèmes actuels de communication par satellite réside dans le fait que les ressources de radiocommunications sont très limitées, avec des flux de données, notamment des flux multimédia, présentant des exigences importantes en termes de constance du débit offert mais également en termes de délai d'acheminement de l'information au travers du système de communication. Ces communications présentent de fortes contraintes d'intégrité et de garanties d'acheminement. Les recommandations du programme Européen SESAR (ou Single European Sky ATM Research, pour Single European Sky Air Traffic Management Research) et les tendances des opérateurs commerciaux préconisent l'utilisation de la suite protocolaire MPLS (Multi Protocol Label Switching) jusqu'au sein du terminal pour l'établissement des liaisons de données, notamment pour éviter d'avoir un protocole de routage particulier sur chaque routeur.

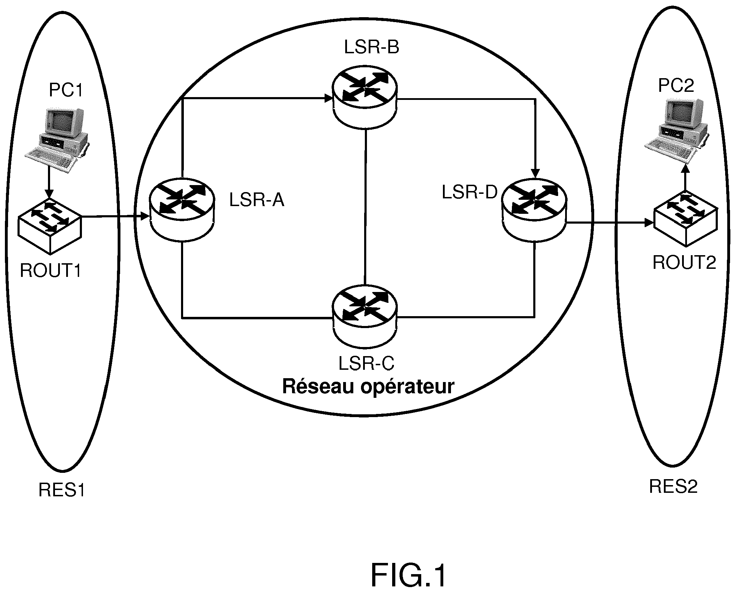

La suite protocolaire MPLS est une solution à l'interface du niveau 2 (couche de liaison de données) et du niveau 3 (couche de réseau) du modèle OSI. Il s'appuie ainsi sur le principe de commutation d'étiquettes de niveau intermédiaire, également appelées labels dans la terminologie anglo-saxonne, entre l'entête de niveau 2 et l'entête de niveau 3 du modèle OSI. La suite protocolaire MPLS consiste à effectuer une commutation, à savoir un acheminement de paquets de données à partir d'un chemin établi préalablement, constitué d'une liste de labels. La figure 1 illustre le principe de fonctionnement de cette suite protocolaire, dans le cadre d'une communication entre deux unités informatiques PC1 et PC2. L'unité informatique PC1, appartenant au réseau RES1, envoie un paquet de données au routeur ROUT1. Le choix du chemin entre la source et la destination est effectué par le premier routeur MPLS, également appelé « ingress Label Switch Router » dans la terminologie anglo-saxonne (ou « ingress LSR », LSR-A sur la figure 1). Ce chemin est appelé « tunnel », et le premier routeur MPLS ajoute au moins un entête, appelé label MPLS, au paquet de données ; celui-ci est placé entre l'entête de niveau 2 et l'entête de niveau 3, selon une procédure dite d'encapsulation. L'entête de niveau 3 est ainsi « masqué » par le label MPLS, pour privilégier la commutation et la correspondance statique des labels. A la réception d'un paquet de données, chaque routeur donné supportant la suite protocolaire MPLS (également appelé « Label Switch Router » dans la terminologie anglo-saxonne, ou LSR, LSR-B sur la figure 1) recherche, dans une base LFIB (pour Label Forwarding Information Base, ou Base d'Information de Transfert d'Etiquette), quel est le prochain routeur à qui transmettre le paquet de données. Pour des raisons de flexibilité, d'ingénierie du trafic ou encore de redondance, il est possible d'empiler des labels MPLS. La sortie du tunnel s'effectue par le dernier routeur MPLS du chemin, également appelé « egress Label Switch Router » dans la terminologie anglo-saxonne (ou « egress LSR », LSR-D sur la figure 1), qui retire l'entête MPLS du paquet, selon une procédure dite de désencapsulation, pour que le routage IP puisse à nouveau s'appliquer pour atteindre le destinataire, à savoir le routeur ROUT2 du réseau RES2 puis l'unité informatique PC2. Seuls le premier routeur MPLS (« ingress LSR ») et le dernier routeur MPLS (« egress LSR ») font une recherche dans leur table de commutation, les autres routeur MPLS (« LSR ») utilisant uniquement les labels MPLS à l'aide de leur table de remplacement de labels MPLS.

L'utilisation de la suite protocolaire MPLS ajoute ainsi des labels de commutation à chaque paquet de données. Dans un contexte d'utilisation de la suite protocolaire MPLS dans un système de communication par satellites, en liaison descendante, la zone de couverture du satellite peut comprendre une pluralité de passerelles qui reçoivent les paquets de données transmis par le satellite. Chaque passerelle dans la zone de couverture du satellite reçoit ainsi les labels de commutation dans chaque paquet de données, alors que les labels de commutation ne sont utiles que pour une passerelle. Par ailleurs, en liaison montante, la passerelle pointant vers le satellite transmet à un terminal par l'intermédiaire du satellite le paquet de données comprenant les labels de commutation, mais transmet également ces paquets de données aux autres passerelles qui sont dans sa zone de rayonnement. Dans tous les cas, l'interface air, et plus généralement les différentes ressources du système, sont fortement affectées par le surdébit engendré par la transmission des labels de commutation, ce qui réduit d'autant les performances du système de communication.

Une solution connue pour résoudre ce problème peut consister à mettre en place des mécanismes de compression des entêtes protocolaires, tel que le mécanisme RoHC (Robust Header Compression), standardisé par l'organisme IETF sous la référence RFC3095. Ce mécanisme permet de diminuer la taille de l'entête mais présente d'autres inconvénients. Il nécessite une phase initiale de mise en relation préalable des hôtes pour chaque session d'échanges, et est complexe à implémenter. De plus, il génère, dans cette phase initiale de mise en relation, une quantité importante de données, ce qui va à l'encontre de l'objectif initial d'optimisation de l'efficacité spectrale. Il n'est ainsi notamment pas adapté aux communications de petits messages (quelques octets ou dizaines d'octets), transmis par exemple lors de connexions TCP.

Dans la suite protocolaire MPLS, il est également connu d'utiliser une technique dite de « penultimate hop popping », qui consiste, au niveau du routeur MPLS situé juste avant le dernier routeur (« egress LSR ») du tunnel, de supprimer le label MPLS et de le remplacer par le label de sortie « implicit-null ». Cette technique permet au dernier routeur (« egress LSR ») de ne pas à avoir à effectuer à la fois une recherche dans la base LFIB, et une recherche dans leur table de routage. Cette solution ne peut toutefois être mise en œuvre qu'en extrémité de transmission, et permet de ne supprimer qu'un seul label MPLS.

On connaît de l'art antérieur le document US 2006/0007925 A1, qui décrit un procédé de traitement d'un paquet de données MPLS, et le document FR 3 006 534, qui décrit un procédé de transmission et de réception de données entre un terminal et une passerelle.

Un objet de l'invention est donc de fournir un procédé permettant d'optimiser efficacement les ressources spectrales d'une communication par satellite entre deux équipements de communication, notamment entre une passerelle et un terminal, dans un contexte d'interconnexion MPLS avec d'autres réseaux, notamment lorsque les paquets de données à communiquer comprennent plusieurs labels MPLS.

Un objet de l'invention permettant d'atteindre ce but, partiellement ou totalement, est un procédé de transmission de données entre un premier équipement de communication et un deuxième équipement de communication, le premier équipement de communication étant configuré pour recevoir d'un routeur connecté au premier équipement de communication des données sous la forme de paquets comprenant au moins une étiquette de niveau intermédiaire, le procédé comprenant au moins :
a) Une étape initiale d'établissement de connexion, comprenant au moins :
   - a1) Une sous étape de transmission, par le premier équipement de communication vers le deuxième équipement de communication, de l'étiquette de niveau intermédiaire ;
   - a2) Une sous-étape d'enregistrement, par le premier équipement de communication, de l'étiquette de niveau intermédiaire ;
b) Une étape de transmission du paquet de données, comprenant :
   - b1) Une sous-étape de suppression, par le premier équipement de communication, de l'étiquette de niveau intermédiaire transmise par le routeur connecté au premier équipement de communication dans le paquet de données, pour former un paquet de données désencapsulé ;
   - b2) Une sous-étape de transmission, par le premier équipement de communication vers le deuxième équipement de communication, du paquet de données désencapsulé, en vue d'être reconstruit après sa transmission sous forme d'un paquet de données reconstruit comprenant le paquet de données désencapsulé et l'étiquette de niveau intermédiaire enregistrée ;
   - b3) une sous-étape de comparaison, par le premier équipement de communication, de l'étiquette de niveau intermédiaire reçue du routeur connecté au premier équipement de communication avec l'étiquette de niveau intermédiaire enregistrée dans le premier équipement de communication ;
   l'étape b) de transmission du paquet de données comprenant en outre :
   - b4) en cas de différence entre l'étiquette de niveau intermédiaire reçue du routeur connecté au premier équipement de communication et l'étiquette de niveau intermédiaire enregistrée dans le premier équipement de communication, une sous-étape d'ajout par le premier équipement de communication d'un entête de signalisation dans le paquet de données désencapsulé à transmettre au deuxième équipement de communication, et une sous-étape de mise à jour de l'étiquette de niveau intermédiaire enregistrée à partir des données contenues dans l'entête de signalisation .

Avantageusement, l'entête de signalisation comprend l'étiquette de niveau intermédiaire à mettre à jour.

Avantageusement, l'étiquette de niveau intermédiaire est un label MPLS, le routeur connecté au premier équipement de communication (LSR-EC1) est un routeur de commutation de label MPLS.

Avantageusement, le premier équipement de communication est configuré pour communiquer avec le deuxième équipement de communication sur une interface de liaison satellitaire.

Avantageusement, le premier équipement de communication est une passerelle, le deuxième équipement de communication est un terminal.

En variante, le premier équipement de communication est un terminal, le deuxième équipement de communication est une passerelle.

Un autre objet de l'invention est un procédé de réception, par un deuxième équipement de communication, de données émises par un premier équipement de communication, le deuxième équipement de communication étant configuré pour transmettre à un routeur connecté au deuxième équipement de communication des données sous la forme de paquets comprenant au moins une étiquette de niveau intermédiaire, le procédé comprenant au moins:
A. Une étape initiale d'établissement de connexion, comprenant au moins :
   - A1) Une sous étape de réception, par le deuxième équipement de communication, de l'étiquette de niveau intermédiaire transmise par le premier équipement de communication ;
   - A2) Une sous-étape d'enregistrement, par le deuxième équipement de communication, de l'étiquette de niveau intermédiaire ;
B. Une étape de réception du paquet de données, comprenant :
   - B1) Une sous-étape de réception, par le deuxième équipement de communication, d'un paquet de données désencapsulé ne comprenant pas d'étiquette de niveau intermédiaire ;
   - B2) Une sous-étape de reconstruction, par le deuxième équipement de communication, d'un paquet de données reconstruit composé du paquet de données désencapsulé et de l'étiquette de niveau intermédiaire préalablement enregistrée ;
   l'étape B) de réception du paquet de données comprenant en outre :
   - B3) Une sous-étape de mise à jour de l'étiquette de niveau intermédiaire enregistrée en cas de réception d'un entête de signalisation avec le paquet de données désencapsulé, à partir des données contenues dans l'entête de signalisation.

Avantageusement, l'entête de signalisation comprend l'étiquette de niveau intermédiaire à mettre à jour.

Avantageusement, l'étiquette de niveau intermédiaire est un label MPLS, le routeur connecté au deuxième équipement de communication est un routeur de commutation de label MPLS.

Avantageusement, le deuxième équipement de communication est configuré pour communiquer avec le premier équipement de communication sur une interface de liaison satellitaire.

Avantageusement, le premier équipement de communication est une passerelle, le deuxième équipement de communication est un terminal.

En variante, le premier équipement de communication est un terminal, le deuxième équipement de communication est une passerelle.

Un autre objet de l'invention est un produit programme d'ordinateur comportant des instructions pour l'exécution du procédé de transmission selon l'une des revendications précité ou du procédé de réception précité lorsque le programme est exécuté par un processeur.

Un autre objet de l'invention est un équipement de communication configuré pour recevoir d'un routeur connecté audit équipement des données sous la forme de paquets comprenant au moins une étiquette de niveau intermédiaire, et pour les transmettre sur une interface de liaison satellitaire, l'équipement de communication étant en outre configuré pour exécuter le procédé de transmission précité.

Un autre objet de l'invention est un équipement de communication configuré pour recevoir des données sous la forme de paquets comprenant au moins une étiquette de niveau intermédiaire, et pour les transmettre à un routeur connecté audit équipement, ledit équipement étant en outre configuré pour exécuter le procédé de réception précité.

Un autre objet de l'invention est un aéronef comprenant un équipement de communication précité.

D'autres caractéristiques, détails et avantages de l'invention ressortiront à la lecture de la description faite en référence aux dessins annexés donnés à titre d'exemple et qui représentent, respectivement :
- la figure 1, un schéma illustrant le principe de fonctionnement de la suite protocolaire MPLS ;
- la figure 2, un synoptique de systèmes de communication sur une interface de liaison satellitaire ;
- la figure 3, un schéma illustrant le traitement d'un paquet de données entre les différentes entités d'un réseau, selon une méthode de transmission de l'état de l'art ;
- la figure 4, un schéma illustrant le traitement d'un paquet de données entre les différentes entités d'un réseau, selon une méthode de transmission conforme à l'invention ;
- la figure 5, un organigramme illustrant le procédé de transmission de données selon l'invention ;
- la figure 6, un organigramme illustrant le procédé de réception de données selon l'invention.

On entend par « terminal » un équipement communicant, qui peut être fixe (par exemple sur le toit d'un immeuble) ou mobile (par exemple sur un porteur mobile, notamment un aéronef piloté ou un drone).

On entend par « passerelle » le sous-ensemble d'une station au sol qui communique d'un côté avec un satellite, et de l'autre côté avec un réseau local.

On entend par « contexte d'interconnexion MPLS » la possibilité de faire dialoguer un équipement de communication, notamment une passerelle ou un terminal, avec des routeurs MPLS.

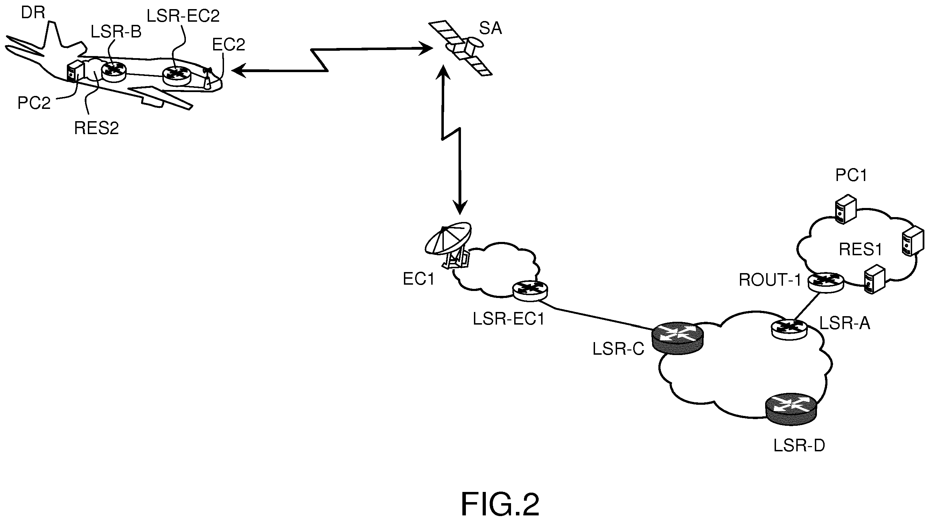

La figure 2 illustre schématiquement un système de communication sur une interface de liaison satellitaire. Le système est constitué d'un segment utilisateur, d'un segment sol et d'un segment spatial. Le segment utilisateur comprend notamment équipement communication EC2 qui peut être un terminal. Le terminal reçoit les services multimédia auxquels il est abonné, et peut transmettre des données via une voix retour qui peut être terrestre ou par satellite. Le terminal comprend par ailleurs un moyen d'interconnexion avec un réseau, éventuellement via un routeur MPLS LSR-dans un contexte d'interconnexion MPLS. Le segment sol comprend les entités responsables du contrôle du réseau et de la gestion du satellite. Il comprend également les entités responsables de l'interconnexion avec des réseaux extérieurs, notamment des équipements de communication EC1 de type passerelles. Une passerelle comprend notamment l'antenne et l'équipement nécessaire pour convertir le signal RF, sur l'interface de liaison satellitaire, en signal IP pour la connectivité terrestre, et inversement. Le segment spatial comprend les satellites aptes à communiquer avec le segment sol et avec le segment utilisateur. Le segment spatial comprend une constellation de satellites SA qui assurent le relais, l'amplification et la transposition du signal transmis. Le premier équipement de communication EC1 peut être relié à un routeur MPLS (LSR-EC1). De la même manière, le deuxième équipement de communication EC2 peut être relié à un routeur MPLS (LSR-EC2). Plusieurs routeurs MPLS sont également représentés sur la figure 2. La figure 2 représente donc schématiquement un « tunnel » utilisé dans la suite protocolaire MPLS, à savoir la commutation de paquets de données entre une source (l'unité PC1) et un destinataire (l'unité PC2), via un premier routeur ROUT-1 du réseau RES1, un routeur de type « ingress LSR » (LSR-A), une pluralité de routeurs MPLS (LSR-C, LSR-D,) et un routeur de type « egress LSR » (LSR-B). La présente invention est décrite et illustrée pour une transmission de données du premier équipement de communication EC1 vers le deuxième équipement de communication EC2, dans le cas où le premier équipement de communication EC1 est une passerelle, et où le deuxième équipement de communication EC2 est un terminal (sens aller) ; elle s'applique de la même manière à une transmission de données dans le cas où le premier équipement de communication EC1 est un terminal, et où le deuxième équipement de communication EC2 est une passerelle (sens retour). D'autres configurations de routeurs peuvent être envisagées, sans sortir du cadre de l'invention.

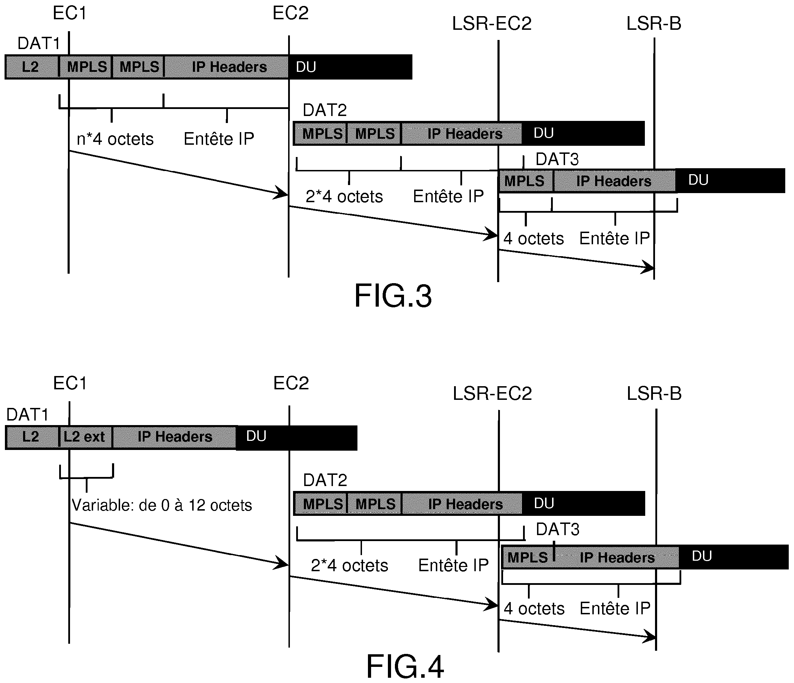

La figure 3 illustre un schéma de traitement d'un paquet de données DAT1 émis par le premier équipement de communication EC1, selon une méthode de transmission de l'état de l'art. Un entête L2 suivi d'au moins une étiquette de niveau intermédiaire (label MPLS) et d'un entête IP (IPv4 ou IPv6) précédent les données à transmettre, également appelées données utiles DU. L'entête L2 comprend généralement des informations nécessaires à la gestion de lien logique qui est établi entre le premier équipement de communication EC1 et le deuxième équipement de communication EC2, telles que par exemple les adresses source et destination, la taille des données comprises dans la trame, l'indication éventuelle de fragmentation, la classe de trafic à laquelle appartiennent les données. Chaque label MPLS comprend 4 octets, et plusieurs labels MPLS peuvent être empilés. L'entête L2 du paquet DAT1 est retiré par le deuxième équipement de communication EC2, pour former le paquet DAT2. Le paquet DAT2 est transmis au routeur LSR-EC2, fonctionnant selon la suite protocolaire MPLS. Le routeur LSR-EC2 forme un paquet DAT3, à destination du routeur LSR-B qui peut se trouver à bord du porteur DR. Le schéma de traitement d'un datagramme émis par un deuxième équipement de communication EC2, du segment utilisateur, vers un premier équipement de communication EC1, du segment sol, est identique.

Les données contenues dans l'étiquette de niveau intermédiaire sont toujours les mêmes d'un paquet de données à l'autre. En effet, les principaux champs de l'étiquette de niveau intermédiaire ont pour valeur les identifiants des labels actifs sur la liaison entre le premier équipement de communication EC1 et le deuxième équipement de communication EC2. Ainsi, l'invention repose sur une suppression des données redondantes émises sur l'interface de liaison satellitaire, en particulier en vue d'une interconnexion avec des routeurs MPLS, pour lesquels l'information de labels MPLS doit être conservée entre le « ingress LSR » et le « egress LSR ».

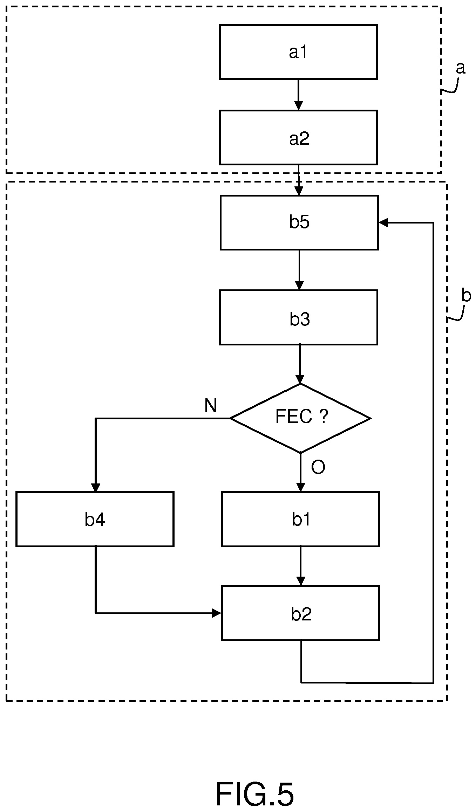

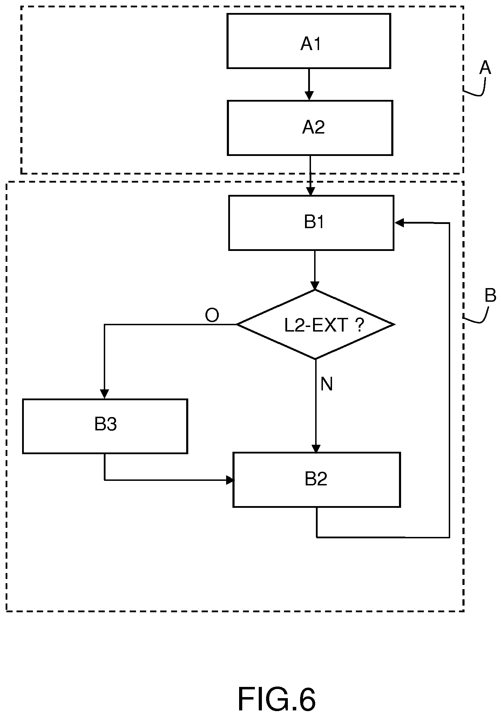

L'invention repose pour cela sur l'échange d'information au cours de l'établissement de la connexion entre le premier équipement de communication EC1 et le deuxième équipement de communication EC2. Cet échange d'information au cours de l'établissement de la connexion est représenté sur la figure 5 par l'étape a) du côté du premier équipement de communication EC1, et sur la figure 6 par l'étape A) du côté du deuxième équipement de communication EC2. Au cours de l'établissement de la connexion, la premier équipement de communication EC1 enregistre dans ses tables systèmes les différents éléments nécessaires à la mise en place de la suite protocolaire MPLS, notamment les labels MPLS, la classe de service, le TTL du paquet (Time to Live). Le premier équipement de communication EC1 transmet au deuxième équipement de communication EC2 un identifiant unique propre au premier équipement de communication EC1, afin que le deuxième équipement de communication EC2 puisse l'identifier lors de l'étape de transmission. Le deuxième équipement de communication EC2 qui cherche à établir une liaison au niveau de la couche liaison de données (couche 2 du modèle OSI) utilise les informations qu'il reçoit des tables systèmes du premier équipement de communication EC1 pour déterminer les paramètres de configuration de la couche réseau (autoconfiguration des adresses, définition de la route par défaut). Le premier équipement de communication EC1 transmet ainsi au deuxième équipement de communication EC2 les étiquettes de niveau intermédiaire (labels MPLS) qu'elle a reçues du routeur LSR-EC1 (sous-étape a1), par le biais du message de demande de connexion au système. Lors d'une sous étape dite d'enregistrement, représentée à l'émission sur la figure 5 par la référence a2, le premier équipement de communication EC1 et le deuxième équipement de communication EC2 enregistrent l'ensemble des étiquettes de niveau intermédiaire devant être transmis au routeur LSR-TL. Ainsi, à l'issue de l'étape d'établissement de connexion, le premier équipement de communication EC1 et le deuxième équipement de communication EC2 ont chacun une copie locale des étiquettes de niveau intermédiaire.

Une fois que l'étape d'établissement de connexion est terminée, le transfert de chaque paquet de données entre le premier équipement de communication EC1 et le deuxième équipement de communication EC2 peut avoir lieu ; cette étape est représentée dans son ensemble sur le schéma de la figure 4. Elle est également représentée sur la figure 5, à l'émission, par la référence b et sur la figure 6, à la réception, par la référence B. Le premier équipement de communication EC1, à la réception de chaque paquet de données (étape b5), détermine en premier lieu si celui-ci est à destination d'un des deuxièmes équipements de communication EC2 connectés au système. Dans l'affirmative, le premier équipement de communication EC1 compare, dans une sous-étape b3), les étiquettes de niveau intermédiaire présentes dans le paquet de données avec les étiquettes de niveau intermédiaire enregistrées dans le premier équipement de communication EC1. Dans le cas contraire, le paquet de données est ignoré et supprimé.

Si les étiquettes sont identiques (on parle de FEC pour « Forward Equivalence Class », ou classe d'équivalence de transfert), le premier équipement de communication EC1 supprime entièrement les étiquettes de niveau intermédiaire potentiellement présentes dans le paquet de données, à savoir les labels MPLS dans le cas d'une interconnexion avec des routeurs MPLS (sous étape b1 dans la figure 5). Le premier équipement de communication EC1, dans une sous-étape b2), transmet le paquet au deuxième équipement de communication EC2, en signalant le type « Headers removed », afin que le deuxième équipement de communication EC2 puisse distinguer les paquets de données avec entête réduit des autres paquets.

Si, au contraire, les étiquettes de niveau intermédiaire présentes dans le paquet sont différentes des étiquettes de niveau intermédiaire enregistrées dans le premier équipement de communication EC1, le premier équipement de communication EC1 construit alors un entête de signalisation L2-ext contenant les informations nécessaires à la reconstruction par le terminal des étiquettes de niveau intermédiaire par combinaison avec les informations dont dispose *a priori* le deuxième équipement de communication EC2. L'entête de signalisation L2-ext peut être de taille variable, par exemple de 0 à 12 octets. La taille maximale de 12 octets correspond à trois labels MPLS, chaque label MPLS faisant quatre octets. La taille maximale peut toutefois être configurée pour être différente de douze octets. Le nombre d'octets de l'entête de signalisation L2-ext est proportionnel à l'importance du changement dans l'étiquette de niveau intermédiaire. Le premier équipement de communication EC1 enregistre l'étiquette de niveau intermédiaire mise à jour (étape b4).

Le procédé de réception, du côté du deuxième équipement de communication EC2, illustré par la figure 6, comprend une première sous-étape A1) de réception, par le deuxième équipement de communication EC2, de l'étiquette de niveau intermédiaire transmise par la premier équipement de communication EC1 et une deuxième sous-étape A2) d'enregistrement par le deuxième équipement de communication EC2, de l'étiquette de niveau intermédiaire. Le deuxième équipement de communication EC2 reçoit le paquet de données désencapsulé (sous-étape B1), et reconstruit le paquet à l'aide de l'étiquette de niveau intermédiaire enregistrée (sous-étape B2). Il peut ensuite transmettre le paquet reconstruit au routeur LSR-EC2, et traiter un nouveau paquet de données, pour lequel l'étape B est à nouveau appliquée. Si le paquet de données désencapsulé reçu par le deuxième équipement de communication EC2 est précédé d'un entête de signalisation L2-ext, il met à jour ses tables, enregistre les étiquettes de niveau intermédiaire (sous-étape B3), et peut reconstruire le paquet avec l'étiquette de niveau intermédiaire enregistrée et mise à jour.

Le gain en performance obtenu avec le procédé selon l'invention est particulièrement remarquable pour des petits paquets, de l'ordre de quelques dizaines d'octets. Ainsi, pour des paquets de données ayant une charge utile sensiblement égale à 80 octets toutes les 30 ms, comme cela peut être le cas pour le standard de compression audio G.723.1 utilisée en visioconférence et téléphonie sur IP, un gain de 12% en volume sur l'interface de liaison satellitaire entre une passerelle (premier équipement de communication) et un terminal (deuxième équipement de communication EC2) a pu être simulé. Les ressources spectrales d'une communication par satellite dans un contexte d'interconnexion MPLS avec d'autres réseaux sont ainsi optimisées efficacement.

L'invention a été décrite et illustrée en particulier pour une transmission de données dans le cas où le premier équipement de communication EC1 est une passerelle et où le deuxième équipement de communication EC2 est un terminal. La transmission de données dans le cas où le premier équipement de communication EC1 est un terminal et où le deuxième équipement de communication EC2 est une passerelle, fonctionne de façon analogue.

## Revendications

1. Procédé de transmission de données entre un premier équipement de communication (EC1) et un deuxième équipement de communication (EC2), le premier équipement de communication (EC1) étant configuré pour recevoir d'un routeur connecté au premier équipement de communication (LSR-EC1) des données sous la forme de paquets comprenant au moins une étiquette de niveau intermédiaire, le procédé comprenant au moins :
a) Une étape initiale d'établissement de connexion, comprenant au moins :
- a1) Une sous étape de transmission, par le premier équipement de communication (EC1) vers le deuxième équipement de communication (EC2), de l'étiquette de niveau intermédiaire ;
- a2) Une sous-étape d'enregistrement, par le premier équipement de communication (EC1), de l'étiquette de niveau intermédiaire ;
b) Une étape de transmission du paquet de données, comprenant :
- b1) Une sous-étape de suppression, par le premier équipement de communication (EC1), de l'étiquette de niveau intermédiaire transmise par le routeur connecté au premier équipement de communication (LSR-EC1) dans le paquet de données, pour former un paquet de données désencapsulé ;
- b2) Une sous-étape de transmission, par le premier équipement de communication (EC1) vers le deuxième équipement de communication (EC2), du paquet de données désencapsulé, en vue d'être reconstruit après sa transmission sous forme d'un paquet de données reconstruit comprenant le paquet de données désencapsulé et l'étiquette de niveau intermédiaire enregistrée ;
- b3) une sous-étape de comparaison, par le premier équipement de communication (EC1), de l'étiquette de niveau intermédiaire reçue du routeur connecté au premier équipement de communication (LSR-EC1) avec l'étiquette de niveau intermédiaire enregistrée dans le premier équipement de communication (EC1) ;
**caractérisé en ce que** l'étape b) de transmission du paquet de données comprend en outre :
- b4) en cas de différence entre l'étiquette de niveau intermédiaire reçue du routeur connecté au premier équipement de communication (LSR-EC1) et l'étiquette de niveau intermédiaire enregistrée dans le premier équipement de communication (EC1), une sous-étape d'ajout par le premier équipement de communication (EC1) d'un entête de signalisation (L2-ext) dans le paquet de données désencapsulé à transmettre au deuxième équipement de communication (EC2), et une sous-étape de mise à jour de l'étiquette de niveau intermédiaire enregistrée à partir des données contenues dans l'entête de signalisation (L2-ext).

2. Procédé de transmission selon la revendication 1, l'entête de signalisation (L2-ext) comprenant l'étiquette de niveau intermédiaire à mettre à jour.

3. Procédé de transmission selon l'une des revendications précédentes, l'étiquette de niveau intermédiaire étant un label MPLS, le routeur connecté au premier équipement de communication (LSR-EC1) étant un routeur de commutation de label MPLS.

4. Procédé de transmission selon l'une des revendications précédentes, le premier équipement de communication (EC1) étant configuré pour communiquer avec le deuxième équipement de communication (EC2) sur une interface de liaison satellitaire.

5. Procédé de transmission selon l'une des revendications précédentes, le premier équipement de communication (EC1) étant une passerelle, le deuxième équipement de communication (EC2) étant un terminal.

6. Procédé de transmission selon l'une des revendications 1 à 4, le premier équipement de communication (EC1) étant un terminal, le deuxième équipement de communication (EC2) étant une passerelle.

7. Procédé de réception, par un deuxième équipement de communication (EC2), de données émises par un premier équipement de communication (EC1), le deuxième équipement de communication (EC2) étant configuré pour transmettre à un routeur connecté au deuxième équipement de communication (LSR-EC2) des données sous la forme de paquets comprenant au moins une étiquette de niveau intermédiaire, le procédé comprenant au moins:
A. Une étape initiale d'établissement de connexion, comprenant au moins :
- A1) Une sous étape de réception, par le deuxième équipement de communication (EC2), de l'étiquette de niveau intermédiaire transmise par le premier équipement de communication (EC1) ;
- A2) Une sous-étape d'enregistrement, par le deuxième équipement de communication (EC2), de l'étiquette de niveau intermédiaire ;
B. Une étape de réception du paquet de données, comprenant :
- B1) Une sous-étape de réception, par le deuxième équipement de communication (EC2), d'un paquet de données désencapsulé ne comprenant pas d'étiquette de niveau intermédiaire ;
- B2) Une sous-étape de reconstruction, par le deuxième équipement de communication (EC2), d'un paquet de données reconstruit composé du paquet de données désencapsulé et de l'étiquette de niveau intermédiaire préalablement enregistrée ;
**caractérisé en ce que** l'étape B) de réception du paquet de données comprend en outre :
- B3) Une sous-étape de mise à jour de l'étiquette de niveau intermédiaire enregistrée en cas de réception d'un entête de signalisation (L2-ext) avec le paquet de données désencapsulé, à partir des données contenues dans l'entête de signalisation (L2-ext).

8. Procédé de réception selon la revendication 7, l'entête de signalisation (L2-ext) comprenant l'étiquette de niveau intermédiaire à mettre à jour.

9. Procédé selon l'une des revendications 7 ou 8, l'étiquette de niveau intermédiaire étant un label MPLS, le routeur connecté au deuxième équipement de communication (LSR-EC2) étant un routeur de commutation de label MPLS.

10. Procédé de réception selon l'une des revendications 7 à 9, le deuxième équipement de communication (EC2) étant configuré pour communiquer avec le premier équipement de communication (EC1) sur une interface de liaison satellitaire.

11. Procédé de réception selon l'une des revendications 7 à 10, le premier équipement de communication (EC1) étant une passerelle, le deuxième équipement de communication (EC2) étant un terminal.

12. Procédé de réception selon l'une des revendications 7 à 10, le premier équipement de communication (EC1) étant un terminal, le deuxième équipement de communication (EC2) étant une passerelle.

13. Produit programme d'ordinateur comportant des instructions pour l'exécution du procédé de transmission selon l'une des revendications 1 à 6 ou du procédé de réception selon l'une des revendications 7 à 12 lorsque le programme est exécuté par un processeur.

14. Equipement de communication (EC1) configuré pour recevoir d'un routeur connecté audit équipement (LSR-EC1) des données sous la forme de paquets comprenant au moins une étiquette de niveau intermédiaire, et pour les transmettre sur une interface de liaison satellitaire, l'équipement de communication (EC1) étant en outre configuré pour exécuter le procédé de transmission selon l'une des revendications 1 à 6.

15. Equipement de communication (EC2) configuré pour recevoir des données sous la forme de paquets comprenant au moins une étiquette de niveau intermédiaire, et pour les transmettre à un routeur connecté audit équipement (LSR-EC2), ledit équipement (EC2) étant en outre configuré pour exécuter le procédé de réception selon l'une des revendications 7 à 12.

## Patentansprüche

1. Verfahren zur Übertragung von Daten zwischen einem ersten Kommunikationsgerät (EC1) und einem zweiten Kommunikationsgerät (EC2), wobei das erste Kommunikationsgerät (EC1) konfiguriert ist zum Empfangen von Daten in Form von Paketen, die mindestens ein Zwischenstufenlabel umfassen, von einem mit dem ersten Kommunikationsgerät (LSR-EC1) verbundenen Router, wobei das Verfahren mindestens Folgendes umfasst:
a) einen ersten Verbindungsaufbauschritt, der mindestens Folgendes umfasst:
- a1) einen Teilschritt des Übertragens des Zwischenstufenlabels vom ersten Kommunikationsgerät (EC1) zum zweiten Kommunikationsgerät (EC2);
- a2) einen Teilschritt des Aufzeichnens des Zwischenstufenlabels durch das erste Kommunikationsgerät (EC1);
b) einen Datenpaketübertragungsschritt, der Folgendes umfasst:
- b1) einen Teilschritt des Löschens, durch das erste Kommunikationsgerät (EC1), des Zwischenstufenlabels, das von dem mit dem ersten Kommunikationsgerät (LSR-EC1) in dem Datenpaket verbundenen Router übertragen wurde, um ein ungekapseltes Datenpaket zu bilden;
- b2) einen Teilschritt des Übertragens, durch das erste Kommunikationsgerät (EC1) an das zweite Kommunikationsgerät (EC2), des ungekapselten Datenpakets, um es nach seiner Übertragung als rekonstruiertes Datenpaket zu rekonstruieren, das das ungekapselte Datenpaket und das aufgezeichnete Zwischenstufenlabel einschließt;
- b3) einen Teilschritt des Vergleichens, durch das erste Kommunikationsgerät (EC1), des aufgezeichneten Zwischenstufenlabels, empfangen von dem mit dem ersten Kommunikationsgerät (LSR-EC1) verbundenen Router, mit dem im ersten Kommunikationsgerät (EC1) aufgezeichneten Zwischenstufenlabel;
**dadurch gekennzeichnet, dass** Schritt b) des Übertragens des Datenpakets ferner Folgendes umfasst:
- b4) im Falle eines Unterschieds zwischen dem Zwischenstufenlabel, das von dem mit dem ersten Kommunikationsgerät (LSR-EC1) verbundenen Router empfangen wurde, und dem im ersten Kommunikationsgerät (EC1) aufgezeichneten Zwischenstufenlabel, einen Teilschritt des Hinzufügens durch das erste Kommunikationsgerät (EC1) eines Signalisierungsheaders (L2-ext) in dem ungekapselten Datenpaket zur Übertragung an das zweite Kommunikationsgerät (EC2), und einen Teilschritt des Aktualisierens des aufgezeichneten Zwischenstufenlabels auf der Basis der im Signalisierungsheader (L2-ext) enthaltenen Daten.

2. Übertragungsverfahren nach Anspruch 1, wobei der Signalisierungsheader (L2-ext) das zu aktualisierende Zwischenstufenlabel umfasst.

3. Übertragungsverfahren nach einem der vorhergehenden Ansprüche, wobei das Zwischenstufenlabel ein MPLS-Label ist, wobei der mit dem ersten Kommunikationsgerät (LSR-EC1) verbundene Router ein MPLS-Label-Schaltrouter ist.

4. Übertragungsverfahren nach einem der vorhergehenden Ansprüche, wobei das erste Kommunikationsgerät (EC1) konfiguriert ist zum Kommunizieren mit dem zweiten Kommunikationsgerät (EC2) über eine Satellitenverbindungsschnittstelle.

5. Übertragungsverfahren nach einem der vorhergehenden Ansprüche, wobei das erste Kommunikationsgerät (EC1) ein Gateway ist, wobei das zweite Kommunikationsgerät (EC2) ein Endgerät ist.

6. Übertragungsverfahren nach einem der Ansprüche 1 bis 4, wobei das erste Kommunikationsgerät (EC1) ein Endgerät ist, wobei das zweite Kommunikationsgerät (EC2) ein Gateway ist.

7. Verfahren zum Empfangen von von einem ersten Kommunikationsgerät (EC1) gesendeten Daten durch ein zweites Kommunikationsgerät (EC2), wobei das zweite Kommunikationsgerät (EC2) zum Übertragen von Daten in Form von Paketen, die mindestens ein Zwischenstufenlabel umfassen, an einen mit dem zweiten Kommunikationsgerät (LSR-EC2) verbundenen Router konfiguriert ist, wobei das Verfahren mindestens Folgendes umfasst:
A. einen ersten Verbindungsaufbauschritt, der mindestens Folgendes umfasst:
- A1) einen Teilschritt des Empfangens, durch das zweite Kommunikationsgerät (EC2), des durch das erste Kommunikationsgerät (EC1) übertragenen Zwischenstufenlabels;
- A2) einen Teilschritt des Aufzeichnens des Zwischenstufenlabels durch das zweite Kommunikationsgerät (EC2);
B. einen Datenpaketempfangsschritt, der Folgendes umfasst:
- B1) einen Teilschritt des Empfangens, durch das zweite Kommunikationsgerät (EC2), eines ungekapselten Datenpakets, das kein Zwischenstufenlabel umfasst;
- B2) einen Teilschritt des Rekonstruierens, durch das zweite Kommunikationsgerät (EC2), eines rekonstruierten Datenpakets, das aus dem ungekapselten Datenpaket und dem voraufgezeichneten Zwischenstufenlabel besteht;
**dadurch gekennzeichnet, dass** Schritt B) des Empfangens des Datenpakets ferner Folgendes umfasst:
- B3) einen Teilschritt des Aktualisierens des Zwischenstufenlabels, das im Falle des Empfangs eines Signalisierungsheaders (L2-ext) mit dem ungekapselten Datenpaket aufgezeichnet wird, auf der Basis der im Signalisierungsheader (L2-ext) enthaltenen Daten.

8. Empfangsverfahren nach Anspruch 7, wobei der Signalisierungsheader (L2-ext) das zu aktualisierende Zwischenstufenlabel umfasst.

9. Verfahren nach einem der Ansprüche 7 oder 8, wobei das Zwischenstufenlabel ein MPLS-Label ist, wobei der mit dem zweiten Kommunikationsgerät (LSR-EC2) verbundene Router ein MPLS-Label-Schaltrouter ist.

10. Empfangsverfahren nach einem der Ansprüche 7 bis 9, wobei das zweite Kommunikationsgerät (EC2) konfiguriert ist zum Kommunizieren mit dem ersten Kommunikationsgerät (EC1) über eine Satellitenverbindungsschnittstelle.

11. Empfangsverfahren nach einem der Ansprüche 7 bis 10, wobei das erste Kommunikationsgerät (EC1) ein Gateway ist, wobei das zweite Kommunikationsgerät (EC2) ein Endgerät ist.

12. Empfangsverfahren nach einem der Ansprüche 7 bis 10, wobei das erste Kommunikationsgerät (EC1) ein Endgerät ist, wobei das zweite Kommunikationsgerät (EC2) ein Gateway ist.

13. Computerprogrammprodukt mit Befehlen zur Ausführung des Übertragungsverfahrens nach einem der Ansprüche 1 bis 6 oder des Empfangsverfahrens nach einem der Ansprüche 7 bis 12, wenn das Programm von einem Prozessor ausgeführt wird.

14. Kommunikationsgerät (EC1), das konfiguriert ist zum Empfangen von Daten in Form von Paketen, die mindestens ein Zwischenstufenlabel umfassen, von einem mit dem Gerät (LSR-EC1) verbundenen Router und zum Übertragen derselben auf eine Satellitenverbindungsschnittstelle, wobei das Kommunikationsgerät (EC1) ferner konfiguriert ist zum Durchführen des Übertragungsverfahrens nach einem der Ansprüche 1 bis 6.

15. Kommunikationsgerät (EC2), das konfiguriert ist zum Empfangen von Daten in Form von Paketen, die mindestens ein Zwischenstufenlabel umfassen, und zum Übertragen derselben an einen mit dem Gerät (LSR-EC2) verbundenen Router, wobei das Gerät (EC2) ferner konfiguriert ist zum Durchführen des Empfangsverfahrens nach einem der Ansprüche 7 bis 12.

## Claims

1. A method of transmitting data between a first communication device (EC1) and a second communication device (EC2), the first communication device (EC1) being configured to receive from a router connected to the first communication device (LSR-EC1) data in the form of packets comprising at least one intermediate level tag, the method comprising at least:
a) an initial step of connection setup, comprising at least:
- a1) a sub-step of transmitting, by the first communication equipment (EC1) to the second communication equipment (EC2), the intermediate level tag;
- a2) a sub-step of recording, by the first communication equipment (EC1), the intermediate level tag;
b) a step of transmitting the data packet, comprising:
- b1) a sub-step of deleting, by the first communication equipment (EC1), the intermediate level tag transmitted by the router connected to the first communication equipment (LSR-EC1) in the data packet, to form a decapsulated data packet;
- b2) a sub-step of transmitting, by the first communication equipment (EC1) to the second communication equipment (EC2), the decapsulated data packet, with a view to being reconstructed after its transmission in the form of a reconstructed data packet including the decapsulated data packet and the recorded intermediate-level tag;
- b3) a sub-step of comparing, by the first communication equipment (EC1), the intermediate level tag received from the router connected to the first communication equipment (LSR-EC1) with the intermediate level tag recorded in the first communication equipment (EC1);
**characterized in that** step b) of transmitting the data packet further comprises:
- b4) in the event of a difference between the intermediate level tag received from the router connected to the first communication equipment (LSR-EC1) and the intermediate level tag recorded in the first communication equipment (EC1), a sub-step of adding, by the first communication equipment (EC1), a signaling header (L2-ext) in the decapsulated data packet to be transmitted to the second communication equipment (EC2), and a sub-step of updating the intermediate level tag recorded from the data contained in the signaling header (L2-ext).

2. The transmission method according to claim 1, the signaling header (L2-ext) comprising the intermediate level tag to be updated.

3. Transmission method according to one of the preceding claims, the intermediate level tag being an MPLS tag, the router connected to the first communication equipment (LSR-EC1) being an MPLS tag switching router.

4. Transmission method according to one of the preceding claims, the first communication equipment (EC1) being configured to communicate with the second communication equipment (EC2) on a satellite link interface.

5. The transmission method according to one of the preceding claims, the first communication equipment (EC1) being a gateway, the second communication equipment (EC2) being a terminal.

6. The transmission method according to one of claims 1 to 4, the first communication equipment (EC1) being a terminal, the second communication equipment (EC2) being a gateway.

7. Method of receiving, by a second communication device (EC2), data sent by a first communication device (EC1), the second communication device (EC2) being configured to transmit to a router connected to the second communication device (LSR-EC2) data in the form of packets comprising at least one intermediate level tag, the method comprising at least:
A. an initial step of establishing a connection, comprising at least:
- A1) A sub-step of receiving, by the second communication equipment (EC2), the intermediate level tag transmitted by the first communication equipment (EC1);
- A2) A sub-step of recording, by the second communication equipment (EC2), the intermediate level tag;
B. a step of receiving the data packet, comprising:
- B1) a sub-step of receiving, by the second communication equipment (EC2), a decapsulated data packet not comprising an intermediate level tag;
- B2) a sub-step of reconstructing, by the second communication equipment (EC2), a reconstructed data packet composed of the decapsulated data packet and of the previously recorded intermediate level tag;
**characterized in that** step B) of receiving the data packet further comprises:
- B3) a sub-step for updating the intermediate-level tag recorded in the case of receiving a signaling header (L2-ext) with the decapsulated data packet, from the data contained in the signaling header (L2-ext).

8. A reception method according to claim 7, the signaling header (L2-ext) comprising the intermediate level tag to be updated.

9. Method according to one of claims 7 or 8, the intermediate level tag being an MPLS tag, the router connected to the second communication equipment (LSR-EC2) being an MPLS tag switching router.

10. Reception method according to one of claims 7 to 9, the second communication equipment (EC2) being configured to communicate with the first communication equipment (EC1) on a satellite link interface.

11. Reception method according to one of claims 7 to 10, the first communication equipment (EC1) being a gateway, the second communication equipment (EC2) being a terminal.

12. Reception method according to one of claims 7 to 10, the first communication equipment (EC1) being a terminal, the second communication equipment (EC2) being a gateway.

13. Computer program product having instructions for executing the transmission method according to one of claims 1 to 6 or the reception method according to one of claims 7 to 12 when the program is executed by a processor.

14. Communication equipment (EC1) configured to receive from a router connected to said equipment (LSR-EC1) data in the form of packets comprising at least one intermediate level tag, and to transmit them on a satellite link interface, the communication equipment (EC1) being further configured to perform the transmission method according to one of claims 1 to 6.

15. Communication equipment (EC2) configured to receive data in the form of packets comprising at least one intermediate level tag, and to transmit them to a router connected to said equipment (LSR-EC2), said equipment (EC2) being further configured to execute the reception method according to one of claims 7 to 12.
